# EUROPÄISCHE PATENTSCHRIFT

(11) **EP 1 558 796 B1**
(45) Veröffentlichungstag und Bekanntmachung des Hinweises auf die Patenterteilung: **01.10.2008**
(21) Anmeldenummer: 03766144.4
(22) Anmeldetag: 09.07.2003
(51) Int. Cl.: D01D 1/06, B29C 47/10, B29B 7/94, B01F 15/04, F04C 2/08, F04C 11/00, F04B 23/02

(54) **VORRICHTUNG UND VERFAHREN ZUM EINSPEISEN EINER FLÜSSIGEN FARBE IN EINE POLYMERSCHMELZE**
DEVICE AND METHOD FOR INJECTING A LIQUID COLOUR INTO A POLYMER MELT
DISPOSITIF ET PROCEDE DESTINES A ALIMENTER UNE PEINTURE LIQUIDE DANS UNE FUSION POLYMERE

(30) Priorität: 24.07.2002 DE 10233468
(43) Veröffentlichungstag der Anmeldung: 03.08.2005
(73) Patentinhaber: Oerlikon Textile GmbH & Co. KG, 42897 Remscheid (DE)
(72) Erfinder: HELBING, Ulrich, 51399 Burscheid (DE); STAUSBERG, Georg, 42897 Remscheid (DE); ALEXANDER, Jörg, 42897 Remscheid (DE); HASENBURG, Jürgen, 42477 Radevormwald (DE)
(74) Vertreter: Kahlhöfer, Hermann
(86) Internationale Anmeldenummer: PCT/EP2003/007435
(87) Internationale Veröffentlichungsnummer: WO 2004/013386

(56) Entgegenhaltungen:
- EP-A- 0 945 171
- EP-A- 1 008 750
- EP-A- 1 020 645
- WO-A-03/035346
- DE-A- 19 956 251
- FR-A- 991 627
- GB-A- 1 311 162
- US-A- 3 023 764
- US-A- 4 221 692
- US-B1- 6 232 371
- US-B1- 6 254 363

## Beschreibung

Die Erfindung betrifft eine Vorrichtung zum Einspeisen einer flüssigen Farbe in eine Polymerschmelze gemäß dem Oberbegriff des Anspruchs 1 sowie ein Verfahren zum Einspeisen einer flüssigen Farbe in eine Polymerschmelze gemäß dem Oberbegriff des Anspruchs 15.

Eine gattungsgemäße Vorrichtung sowie ein gattungsgemäßes Verfahren ist aus der DE 199 56 251 A1 bekannt.

Aus der US 6,232,371 B1 ist ein dispersiver Zusatz für ein polymeres, schmelzspinnbares, thermoplastisches Trägermaterial bekannt. Weiterhin beschreibt diese Druckschrift ein Verfahren zur Herstellung eines solchen Werkstoffes und ein Verfahren zur Herstellung eines thermoplastischen Polymerkomposits, welches ein solches Additiv beinhaltet.

Aus der GB 1 311 162 sind Mittel zur Zuführung von farbigem heiß geschmolzenem Polymer zu einem Spinnbalken einer Spinnmaschine bekannt, wobei die Zuführmittel eine Polymerisationsspule aufweisen, durch die die heiße Polymerschmelze zu den Spinnbalken transportiert wird, wobei die Spule eine Injektionsstelle aufweist, eine Rotationspumpe, eine Verteilleitung, welche die Rotationspumpe mit der Injektionsstelle verbindet, sowie eine Zuführpumpe zur Zuführung von Farbstoff unter einem vorbestimmten steuerbaren Druck aus einem Tank zur Rotationspumpe.

Weiterhin ist aus der US 3,023 764 ein System zum Mischen von Flüssigkeiten bekannt, mit dem ein konstantes Verhältnis eines Additivs in eine filamentbildende Spinnlösung eindosierbar ist, wobei der Strom der Spinnlösung variabel ist.

Schließlich zeigt die US 4,221,692 ein Verfahren, bei dem ein Additiv in eingeschmolzenes Polymer eingeleitet wird und anschließend eine Homogenisierung durchgeführt wird. Ein Teil des homogenisierten Materials wird danach in einem weiteren Verarbeitungsprozess zugeführt und ein anderer Teil rezykliert und mit Polymer- oder Additivmengen vermengt, die dem Homogenierungsprozess noch nicht unterzogen worden sind.

Um beim Schmelzspinnen synthetischer Fäden eine Einfärbung der Polymerschmelze zu erhalten, wird bei der bekannten Vorrichtung eine flüssige Farbe der Polymerschmelze zugefügt und anschließend vermischt. Hierzu ist die flüssige Farbe in einem Tank gespeichert. An dem Tank ist eine Dosierpumpe angeschlossen. Dosierpumpe ist über eine Leitung mit einer die Polymerschmelze fördernde Spinnpumpe verbunden. Der Spinnpumpe wird über einen Extruder die Polymerschmelze zugeführt. Zum Einfärben der Polymerschmelze wird die flüssige Farbe in dosierter Menge durch die Dosierpumpe der Polymerschmelze aufgegeben. Um eine gleichmäßige und über die Zeit konstante Einfärbung der Polymerschmelze zu erhalten, ist es Voraussetzung, dass die flüssige Farbe exakt in ihrer Menge kontinuierlich der Polymerschmelze zugeführt wird. Bei der bekannten Vorrichtung tritt jedoch das Problem auf, dass die Dosierpumpe eine Druckdifferenz zwischen der drucklos gehaltenen flüssigen Farbe und der unter einem Überdruck geführten Schmelze überbrücken muss. So wird beispielsweise die Polymerschmelze am Ausgang eines Extruders unter einem Überdruck von ca. 100 bar geführt. Damit treten in der Dosierpumpe jedoch verstärkt volumetrische Verluste auf, die eine Mengeneinstellung zur Dosierung der Farbe negativ beeinflussen. Ein weiteres Problem bei der bekannten Vorrichtung liegt darin, dass durch die unmittelbare Anbindung zwischen der Spinnpumpe und der Dosierpumpe eine unter Druck stehende Polymerschmelze unmittelbar bei drucklos gehaltener Dosierpumpe abfließt.

Es ist nun Aufgabe der Erfindung, eine Vorrichtung der eingangs genannten Art sowie ein Verfahren der eingangs genannten Art derart weiterzubilden, dass eine flüssige Farbe mit möglichst großer Dosiergenauigkeit einer Polymerschmelze zugeführt werden kann.

Ein weiteres Ziel der Erfindung ist es, eine gattungsgemäße Vorrichtung zu schaffen, die mit hoher Flexibilität an einer Spinnvorrichtung oder einer anderen schmelzeführenden Einrichtung adaptierbar ist, um eine flüssige Farbe oder flüssigen Additive einzuspeisen.

Die der Erfindung zugrunde liegende Aufgabe wird durch eine Vorrichtung mit den Merkmalen nach Anspruch 1 sowie durch ein Verfahren mit den Merkmalen nach Anspruch 15 gelöst.

Vorteilhafte Weiterbildungen der Erfindung sind in den Merkmalen und Merkmalskombinationen der jeweiligen Unteransprüche definiert.

Der besondere Vorteil der Erfindung liegt darin, dass eine flüssige Farbe an jeder beliebigen Position innerhalb der schmelzeführenden Bauteile einer Spinnvorrichtung oder einer anderen schmelzeführenden Einrichtung dosiert mit größtmöglicher Mengengenauigkeit der Polymerschmelze zugeführt werden kann. Insbesondere an den Stellen, an denen die Polymerschmelze unter einem hohen Überdruck durch ein Führungsmittel geführt wird, ist das sichere und genaue Einbringen einer Farbe problemlos durch die Erfindung ausführbar. Hierzu ist der Dosiereinlaß der Dosierpumpe mit einem Förderauslaß einer Förderpumpe verbunden, die ihrerseits über einen Fördereinlaß mit dem Tank verbunden ist. Insoweit liegt ein Vorteil der Erfindung darin, dass zwischen den Funktionen "Farbe fördern" und "Farbe dosieren" getrennt wird. Dabei wird durch die Förderpumpe die flüssige Farbe aus dem Tank entnommen und unter Druck der Dosierpumpe zugeführt. Durch entsprechende Druckeinstellungen am Dosiereinlaß der Dosierpumpe können minimale Druckdifferenzen eingestellt werden, so dass sehr geringe volumetrische Verluste beim Dosieren der flüssigen Farbe mittels der Dosierpumpe auftreten.

Um die Entnahme der flüssigen Farbe aus dem Tank zu verbessern, wird gemäß der Erfindung vorgeschlagen, dass der Tank mit einer Druckquelle verbunden ist, durch welche ein auf die im Tank gespeicherte Farbe einwirkendes Gaspolster erzeugbar ist. Als Gas sind hierbei Luft oder Stickstoff besonders geeignet. Dabei ist es unabhängig davon, ob der Tank unmittelbar Bestandteil der Baueinheit ist oder separat aufgestellt und über Leitungen mit der Dosierpumpe oder der Förderpumpe verbunden ist.

Um möglichst die Fördermenge der Förderpumpe mit der Dosiermenge der Dosierpumpe anzugleichen, ist gemäß einer vorteilhaften Weiterbildung der Erfindung der Dosierpumpe und der Förderpumpe jeweils ein steuerbarer Pumpenantrieb zugeordnet. Die Pumpenantriebe werden über eine Steuereinrichtung separat angesteuert.

Dabei wird die Druckeinstellung eines Förderdruckes am Dosiereinlaß der Dosierpumpe vorteilhaft dadurch überwacht und eingestellt, indem ein Drucksensor zwischen dem Förderauslaß der Förderpumpe und dem Dosiereinlaß der Dosierpumpe angeordnet ist. Der Drucksensor ist über eine Signalleitung mit der Steuereinrichtung verbunden, so dass innerhalb der Steuereinrichtung ein Ist/Soll-Vergleich ausführbar ist und bei einer Abweichung eine entsprechende Korrektur in der Steuerung der Förderpumpe unmittelbar ausführbar ist.

Um den Regel- und Steuerungsaufwand möglichst gering zu halten, läßt sich die Dosierpumpe und die Förderpumpe jedoch auch vorteilhaft durch einen gemeinsamen Pumpenantrieb antreiben. Um sicherzustellen, dass ein Druck zwischen der Förderpumpe und der Dosierpumpe aufgebaut werden kann, ist die Förderpumpe gegenüber der Dosierpumpe mit einem größeren Fördervolumen ausgestattet. Somit läßt sich auch bei gleicher Antriebsdrehzahl der beiden Pumpen ein Überschuß beim Fördern der flüssigen Farbe erreichen.

Da bei einer Überschußförderung der Förderdruck auf dem Niveau eines Sollwertes gehalten werden muss, ist gemäß einer vorteilhaften Weiterbildung der Erfindung der Förderauslaß der Förderpumpe durch eine Förderleitung mit dem Dosiereinlaß der Dosierpumpe verbunden. Dabei ist die Förderleitung über ein Druckstellventil mit einer Bypassleitung gekoppelt. Durch das Druckstellventil läßt sich somit ein Sollwert des Förderdruckes innerhalb der Förderleitung einstellen. Bei Drucküberschreitung des Sollwertes wird ein Teil der flüssigen Farbe aus der Förderleitung über das Druckstellventil und die Bypassleitung abgeführt.

Die Bypassleitung ist vorteilhaft unmittelbar mit dem Tank oder mit dem Fördereinlaß der Förderpumpe gekoppelt, so dass keine Verluste an flüssiger Farbe auftreten.

Die Erfindung gemäß Anspruch 12 bietet den besonderen Vorteil, eine besonders zur Einspeisung der flüssigen Farbe geeignete Position innerhalb der Spinnvorrichtung oder einer anderen schmelzeführenden Einrichtung auswählen zu können. Hierzu ist die Dosierpumpe als eine Baueinheit mit einem dem Dosierauslaß zugeordneten Schmelzeanschluß und mit einem dem Dosiereinlaß zugeordneten Farbanschluß ausgebildet. Die Baueinheit ist durch den Schmelzeanschluß wahlweise an einem von mehreren Führungsmitteln einer Spinnvorrichtung oder einer anderen schmelzeführenden Einrichtung anschließbar. Damit läßt sich bereits bei Verwendung einer einfachen Dosierpumpe eine hinreichend genaue Beimengung der flüssigen Farbe in die Polymerschmelze erreichen.

Bei einer besonders bevorzugten Weiterbildung der Erfindung ist dem Dosierauslaß der Dosierpumpe eine Rücklaufeinrichtung zugeordnet, durch welche ein Rückfluß der Polymerschmelze aus dem Schmelzeanschluß in den Dosierauslaß verhindert wird. Damit sind Prozeßabläufe, Ankopplungen und separate Abschaltungen der Dosierpumpe möglich ohne das ein unzulässiges Abführen der Polymerschmelze eintritt.

Die Rücklaufeinrichtung kann vorteilhaft durch ein Rückschlagventil oder ein Einfrierventil gebildet sein. Bei einem Einfrierventil würde bereits ein beheiztes Rohrstück ausreichen, dessen Länge derart bemessen ist, dass eine zurückfließende Polymerschmelze innerhalb des unbeheizten Rohrstückes erstarrt. Zum Lösen der Rücklaufeinrichtung würde in diesem Fall das Rohrstück beheizt. Eine sichere und schnell wirksame Rücklaufeinrichtung kann vorteilhaft auch durch ein Rückschlagventil erfolgen, welches nur den Durchfluß der flüssigen Farbe zuläßt.

Um die Entnahme der flüssigen Farbe aus dem Tank zu verbessern, wird gemäß einer vorteilhaften Weiterbildung der Erfindung vorgeschlagen, dass der Tank mit einer Druckquelle verbunden ist, durch welche ein auf die im Tank gespeicherte Farbe einwirkendes Gaspolster erzeugbar ist. Als Gas sind hierbei Luft oder Stickstoff besonders geeignet. Dabei ist es unabhängig davon, ob der Tank unmittelbar Bestandteil der Baueinheit ist oder separat aufgestellt und über Leitungen mit der Dosierpumpe oder der Förderpumpe verbunden ist.

Grundsätzlich können alle die flüssige Farbe führenden Bauteile beheizbar ausgebildet sein, um insbesondere auch hochviskose Farben einspeisen zu können. So lassen sich Baueinheiten sowie angeschlossene Schläuche beheizbar ausbilden.

Das erfindungsgemäße Verfahren zeichnet sich insbesondere dadurch aus, dass die flüssige Farbe in vorbestimmter Menge ohne wesentliche Schwankungen in der Dosierung der Polymerschmelze beigemengt werden kann. Das erfindungsgemäße Verfahren ist dabei besonders geeignet, um eine flüssige Farbe möglichst kurz vor dem Schmelzspinnen oder Extrudieren der Polymerschmelze beispielweise zu synthetischen Fasern beizumengen. Dabei wird die flüssige Farbe mittels einer Förderpumpe aus dem Tank gefördert und unter einem Förderdruck der Dosierpumpe zugeführt. An der Dosierpumpe wirkt somit eine Druckdifferenz, die in Abhängigkeit von dem Einspeisedruck in der Dosierpumpe und dem Förderdruck der Förderpumpe ist. Zusätzlich wird durch Verbinden mit einer Druckquelle ein Gaspolster erzeugt, welches auf die im Tank gespeicherte Farbe einwirkt.

Um möglichst geringe volumetrische Verluste beim Dosieren der flüssigen Farbe zu erhalten, ist der Förderdruck der flüssigen Farbe am Dosiereinlaß der Dosierpumpe vorteilhaft gleich oder kleiner als der Einspeisedruck der flüssigen Farbe am Dosierauslaß der Dosierpumpe eingestellt. Es ist jedoch auch möglich einen etwas größeren Förderdruck einzustellen, entscheidend ist nur das Vorherrschen eines Differenzdruckes.

Das Zusammenwirken der Förderpumpe und der Dosierpumpe kann dabei nach zwei alternativen Verfahrensvarianten ausgeführt sein. Bei einer ersten Verfahrensvariante wird das Fördervolumen der Förderpumpe derart geregelt, dass der Förderdruck der flüssigen Farbe am Dosiereinlaß der Dosierpumpe im wesentlichen konstant ist. Diese Verfahrensvariante zeichnet sich durch eine hohe Flexibilität und Einstellbarkeit aus.

Bei einer alternativen Variante ist das Fördervolumen der Förderpumpe größer gewählt, als das Fördervolumen der Dosierpumpe. Damit wird bei gleicher Antriebsdrehzahl der Förderpumpe und der Dosierpumpe ein Überschuß gefördert, so dass der Förderdruck sich über eine einfache Druckeinstellung und Abführung überschüssiger Farbe einstellen läßt. Diese Variante zeichnet sich durch den geringen Antriebs- und Steuerungsaufwand besonders aus.

Das erfindungsgemäße Verfahren wird nachfolgend anhand einiger Ausführungsbeispiele der erfindungsgemäßen Vorrichtung unter Hinweis auf die beigefügten Zeichnungen näher beschrieben.

Es stellen dar:
- Fig. 1: schematisch der Aufbau eines ersten Ausführungsbeispiels der erfindungsgemäßen Vorrichtung
- Fig. 2: schematisch eine Querschnittsansicht eines weiteren Ausführungsbeispiels der erfindungsgemäßen Vorrichtung
- Fig. 3: schematisch eine Ansicht eines Ausschnitts einer Spinnvorrichtung
- Fig. 4: schematisch eine Querschnittsansicht eines weiteren Ausführungsbeispiels der erfindungsgemäßen Vorrichtung.

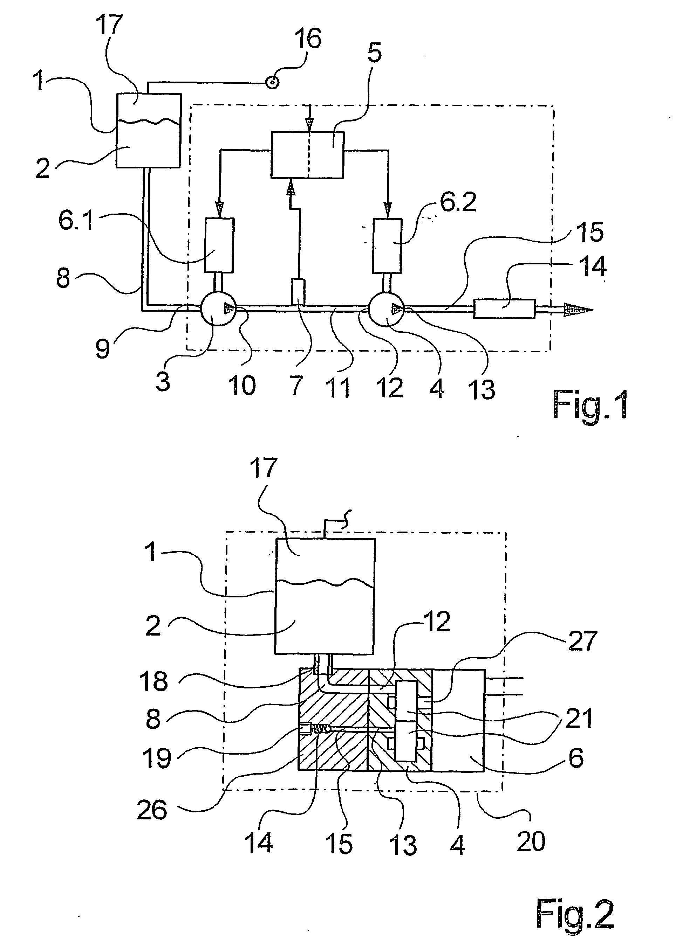

In Fig. 1 ist der Aufbau eines ersten Ausführungsbeispiels der erfindungsgemäßen Vorrichtung zur Durchführung des erfindungsgemäßen Verfahrens gezeigt.

Die Vorrichtung weist eine Förderpumpe 3 und eine Dosierpumpe 4 auf. Die Förderpumpe 3 ist über einen Fördereinlaß 9 und eine Einlaßleitung 8 mit einem Tank 1 verbunden. Der Tank 1 enthält eine flüssige Farbe 2 und kann beheizbar ausgebildet sein. Der Tank 1 ist druckdicht ausgebildet und auf der gegenüberliegenden Seite der Einlaßleitung 8 mit einer Druckquelle 16 verbunden. Durch die Druckquelle 16 wird ein Druckmedium beispielsweise Luft-oder Stickstoff in einem freien Raum oberhalb der Farbe 2 innerhalb des Tanks 1 eingelassen, so dass sich ein Gaspolster 17 ausbildet.

Die Förderpumpe 3 ist über einen Förderauslaß 10 mit einer Förderleitung 11 mit einem Dosiereinlaß 12 der Dosierpumpe 4 verbunden. Die Dosierpumpe 4 ist über eine Dosierauslaß 13 und eine Dosierleitung 15 mit einem eine Polymerschmelze führenden Führungsmittel (hier nicht dargestellt) verbunden. Innerhalb der Dosierleitung 15 ist eine Rücklaufeinrichtung 14 angeordnet.

Die Förderpumpe 3 wird durch den Pumpenantrieb 6.1 und die Dosierpumpe wird durch den Pumpenantrieb 6.2 angetrieben. Die Ansteuerung der Pumpenantriebe 6.1 und 6.2 erfolgt über die Steuereinrichtung 5. Die Steuereinrichtung 5 ist mit einem Drucksensor 7 gekoppelt, welcher der Förderleitung 11 zugeordnet ist, um einen Förderdruck innerhalb der Förderleitung 11 zu messen.

Um die flüssige Farbe 2 aus dem Tank 1 einer Polymerschmelze innerhalb eines Führungsmittels dosiert beizumengen, werden die Förderpumpe 3 und die Dosierpumpe 4 separat durch die Pumpenantriebe 6.1 und 6.2 angetrieben. Der Pumpenantrieb 6.2 der Dosierpumpe 4 wird durch die Steuereinrichtung 5 derart gesteuert, dass eine gewünschte Menge der flüssigen Farbe durch die Dosierpumpe 4 kontinuierlich über die Dosierleitung 15 dem die Polymerschmelze führenden Führungsmittel zugeleitet wird. Hierbei wird die flüssige Farbe unter einem Einspeisedruck in der Dosierleitung 15 geführt. Um die volumetrischen Verluste innerhalb der Dosierpumpe 6.2 möglichst gering zu halten, wird der Pumpenantrieb 6.1 der Förderpumpe durch die Steuereinrichtung 5 derart gesteuert, dass die Fördermenge der Förderpumpe 3 einen vorbestimmten Förderdruck in der Förderleitung 11 erzeugt. Der Förderdruck am Dosiereinlaß 12 und der Einspeisedruck am Dosierauslaß 13 der Dosierpumpe 4 bilden einen für die Dosierung der Farbe optimierte Druckdifferenz. Die Einstellung der Druckdifferenz wird durch die Einstellung des Förderdruckes beeinflußt und geregelt. Der Förderdruck innerhalb der Förderleitung 11 wird durch den Drucksensor 7 erfaßt und der Steuereinrichtung 5 aufgegeben. Innerhalb der Steuereinrichtung 5 wird der jeweilige Ist-Wert des Förderdruckes mit einem in der Steuereinrichtung 5 hinterlegten oder eingestellten Soll-Wert des Förderdruckes verglichen. Für den Fall, dass eine Abweichung zwischen dem Soll-Wert und dem Ist-Wert des Förderdruckes festgestellt wird, erzeugt die Steuereinrichtung 5 ein entsprechendes Steuersignal zur Änderung der Antriebsdrehzahl des Pumpenantriebes 6.1 der Förderpumpe 3. Die Förderpumpe 3 fördert dabei die Farbe 2 aus dem Tank 1. Zur besseren Entnahme der Farbe 2 aus dem Tank 1 wirkt auf dem Flüssigkeitsspiegel der Farbe 2 ein Gaspolster 17 innerhalb des Tanks 1.

Zwischen der Dosierpumpe 4 und dem nicht dargestellten Führungsmittel ist innerhalb der Dosierleitung 15 die Rücklaufeinrichtung 14 angeordnet. Die Rücklaufeinrichtung 14 ist derart ausgebildet, dass ein Rückfluß der Polymerschmelze aus dem Führungsmittel zur Dosierpumpe 4 vermieden wird. So läßt sich beispielsweise ein Farbwechsel ohne weiteres ohne Unterbrechung der Ankopplung zu dem Führungsmittel ausführen. Auch das Anfahren oder Abstellen der Dosierpumpe 4 und der Förderpumpe 3 können aufgrund der Rücklaufeinrichtung 14 ungeachtet des Schmelzedruckes der Polymerschmelze erfolgen.

Die Rücklaufeinrichtung 14 könnte dabei als ein Rückschlagventil ausgebildet sein, bei welcher ein Ventilsitz mit einem beweglich geführten Stellmittel zusammenwirken. Dabei wird die durch die Dosierpumpe 4 geförderte Farbe 2 ungehindert den Ventilsitz passieren. Die entgegengesetzte Flußrichtung wird jedoch durch das Stellmittel versperrt, indem das Stellmittel im Ventilsitz schließt. Die Rücklaufeinrichtung 14 könnte jedoch auch als ein beheiztes Rohrstück ausgebildet sein, welches in der Länge derart bemessen ist, dass im kalten Zustand eine rückfließende Polymerschmelze innerhalb des Rohrstückes erstarrt. Das Rohrstück würde nur für den Fall, dass nach Erstarrung der Schmelze in dem Rohrstück die Durchflußrichtung in beiden Richtungen unterbrochen ist, erhitzt. Die erstarrte Schmelze in dem Rohrstück löst sich und läßt sich durch die geförderte Farbe der Dosierpumpe 4 wegspülen.

Der in Fig. 1 gezeigte Aufbau der erfindungsgemäßen Vorrichtung läßt sich sowohl durch einzelne separate über Leitungen verbundene Aggregate ausbilden oder zu einer Baueinheit vereinigen.

In Fig. 2 ist schematisch eine Querschnittsansicht eines weiteren Ausführungsbeispiels einer erfindungsgemäßen Vorrichtung gezeigt. Hierbei sind die Bauteile gleicher Funktion mit identischen Bezugszeichen versehen. Die Vorrichtung besteht aus einer Dosierpumpe 4 und einem Verteilerblock 26, die zu einer Baueinheit 20 vereint sind. Der Verteilerblock 26 und die Dosierpumpe 4 sind in Plattenbauweise unmittelbar aneinandergeflanscht. Die Dosierpumpe 4 ist als eine Zahnradpumpe ausgebildet, mit einem Zahnradpaar 21. Das Zahnradpaar 21 wird über den Pumpenantrieb 6 und eine Antriebswelle 27 angetrieben.

Innerhalb des Verteilerblockes 26 ist eine Einlaßleitung 8 ausgebildet, die mit dem Dosiereinlaß 12 der Dosierpumpe 4 verbunden ist. Die Einlaßleitung 8 mündet in einen Farbanschluß 18, an welchem unmittelbar ein Tank 1 angeschlossen ist. Seitlich versetzt zu dem Farbanschluß 18 ist an dem Verteilerblock 26 ein Schmelzeanschluß 19 ausgebildet. Der Schmelzeanschluß 19 ist über die Dosierleitung 15 mit dem Dosierauslaß 13 der Dosierpumpe 4 verbunden. In der Dosierleitung 15 ist innerhalb des Verteilerblockes 26 eine Rücklaufeinrichtung 14 in Form eines Rückschlagventils ausgebildet.

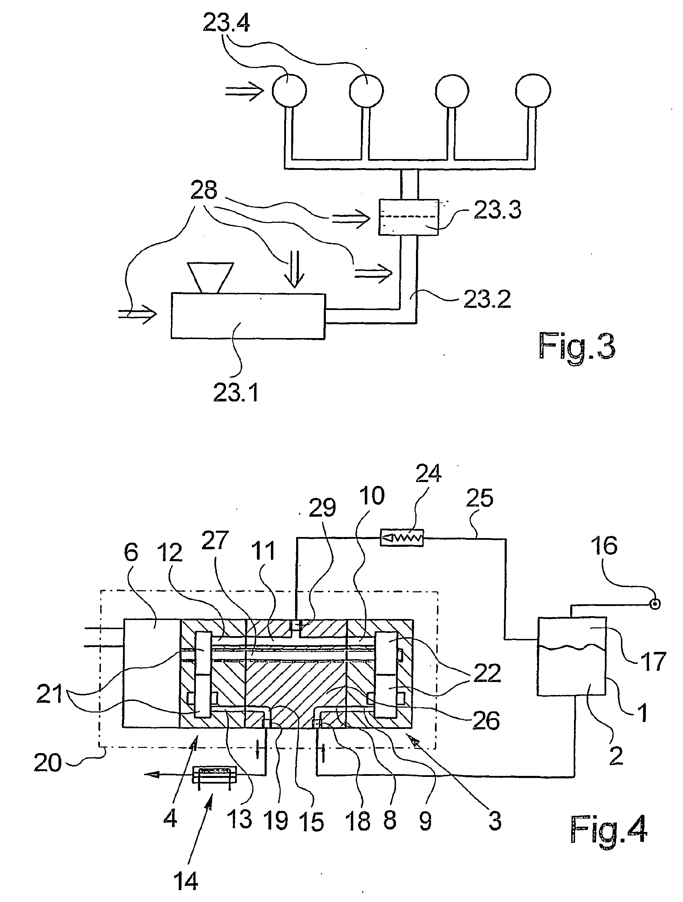

Die Baueinheit 20 läßt sich über den Schmelzeanschluß 19 durch eine Schlauchleitung, Rohrleitung oder eine Flanschverbindung mit einem beliebigen Führungsmittel einer Spinnvorrichtung koppeln. In Fig. 3 ist ein Ausschnitt einer Spinnvorrichtung dargestellt, wobei die möglichen Kopplungsstellen 28 zu einem Führungsmittel 23 durch jeweils einen Doppelpfeil gekennzeichnet sind. In der Spinnvorrichtung wird die Polymerschmelze zunächst durch einen Extruder 23.1 aufgeschmolzen. Dem Extruder 23.1 wird hierzu das Polymer in Granulatform aufgegeben. Auf der Auslaßseite des Extruders 23.1 ist eine Schmelzeleitung 23.2 angeordnet, über die die Polymerschmelze zu mehreren Spinnstellen geführt wird. Jede der Spinnstellen enthält jeweils eine Spinnpumpe 23.4. In Fig. 4 sind beispielhaft vier Spinnpumpen 23.4 dargestellt. In der Schmelzeleitung 23.2 ist bei diesem Ausführungsbeispiel ein zusätzlicher dynamischer Mischer 23.3 vorgesehen. Um ein Einfärben des Polymers durch eine Flüssigfarbe ausführen zu können, läßt sich die Baueinheit 20 wahlweise an einer der Kopplungsstellen 28 anbringen. So könnte die flüssige Farbe sowohl im Eingangsbereich als auch im Austrittsbereich des Extruders 23.1 der Schmelze zugeführt werden. Vorteilhaft wird die flüssige Farbe jedoch unmittelbar hinter dem Extruder 23.1 der Polymerschmelze zugeführt. Hierbei könnte die Baueinheit nach Fig. 2 unmittelbar an die Schmelzeleitung 23.2 oder an die Mischer 23.3 oder an die Spinnpumpe 23.4 gekoppelt werden. Zweckmäßigerweise wird die Spinnpumpe 23.4 dabei als Mischpumpe mit integriertem Mischer ausgeführt.

In Fig. 4 ist ein weiteres Ausführungsbeispiel der erfindungsgemäßen Vorrichtung schematisch in einer Querschnittsansicht dargestellt. Bei diesem Ausführungsbeispiel sind die Förderpumpe 3 und die Dosierpumpe 4 zu einer Baueinheit 20 angeordnet. Die Förderpumpe 3 und die Dosierpumpe 4 sind hierzu an zwei Seiten eines Verteilerblockes 26 angeflanscht. Auf der linken Seite befindet sich die Dosierpumpe 4 und auf der rechten Seite die Förderpumpe 3. Die Förderpumpe 3 enthält einen Zahnradsatz 22 und die Dosierpumpe 4 den Zahnradsatz 21. Der Zahnradsatz 21 und der Zahnradsatz 22 werden gemeinsam über eine Antriebswelle 27 und den Pumpenantrieb 6 angetrieben. Hierzu durchdringt die Antriebswelle 27 den Verteilerblock 26. Auf der Unterseite des Verteilerblocks 26 ist der Farbanschluß 18 ausgebildet, der über eine Einlaßleitung 8 in den Verteilerblock 26 mit dem Fördereinlaß 9 der Förderpumpe 3 verbunden ist. Der Farbanschluß 18 ist über ein Rohr oder einen Schlauch mit dem Tank 1 verbunden.

Neben dem Farbanschluß 18 ist an der Unterseite des Verteilerblockes 26 der Schmlezeanschluß 19 angeordnet. Der Schmelzeanschluß 19 ist durch die Dosierleitung 15 mit dem Dosierauslaß 13 der Dosierpumpe 4 verbunden.

Der Förderauslaß 10 der Förderpumpe 3 und der Dosiereinlaß 12 der Dosierpumpe 4 sind durch eine Förderleitung 11 innerhalb des Verteilerblocks 26 miteinander verbunden.

An der Förderleitung 11 ist ein Rücklaufanschluß 29 angeschlossen. Der Rücklaufanschluß 29 ist mit einer Bypassleitung 25 verbunden, in welcher ein Druckstellventil 24 angeordnet ist. Die Bypassleitung 25 verbindet den Rücklaufanschluß 29 mit dem Tank 1. Der Tank 1 ist entsprechend den vorhergehenden Ausführungsbeispielen ausgeführt, so dass auf die vorhergehende Beschreibung Bezug genommen wird.

Im Betrieb werden die Förderpumpe 3 und die Dosierpumpe 4 gemeinsam durch den Pumpenantrieb 6 angetrieben. Der Zahnradsatz 22 der Förderpumpe 3 ist im Vergleich zu dem Zahnradsatz 21 der Dosierpumpe 4 derart gewählt, dass die Förderpumpe 3 eine größere Fördermenge fördert als die Dosierpumpe 4. Durch den angetriebenen Zahnradsatz 22 wird die flüssige Farbe aus dem Tank 1 in die Förderleitung 11 gefördert. Die flüssige Farbe in der Förderleitung 11 wird durch die Dosierpumpe 4 mit dosierter Menge zum Schmelzeanschluß 19 geführt. Hierbei ist der in der Förderleitung 11 vorherrschende Förderdruck durch das Druckstellventil 24 bestimmt.

Wird in der Förderleitung 11 ein Grenzwert des Förderdruckes überschritten, so wird ein Teilstrom der flüssigen Farbe über das Druckstellventil 24 und der Bypassleitung 25 zu dem Tank 1 zurückgeführt.

Bei dem in Fig. 4 dargestellten Ausführungsbeispiel ist das Druckstellventil 24 und die Bypassleitung 25 außerhalb der Baueinheit separat angeordnet. Grundsätzlich könnte jedoch das Druckstellventil und die Bypassleitung innerhalb des Verteilerblockes 26 integriert sein, wobei die Bypassleitung eine Verbindung zwischen der Förderleitung 11 und dem Fördereinlaß 9 der Förderpumpe 3 herstellt.

Bei dem Ausführungsbeispiel ist die Rücklaufeinrichtung 14 außerhalb des Verteilerblockes 26 unmittelbar am Schmelzeanschluß 19 angeordnet. Die Rücklaufeinrichtung 14 wird hierbei durch ein Rohrstück und einer Heizeinrichtung gebildet. Für den Fall, dass die Förderpumpe 3 und die Dosierpumpe 4 drucklos geschaltet sind, wird ein zurückfließender Schmelzestrom innerhalb des Rohrstückes der Rücklaufeinrichtung 14 erstarren.

Der Rückfluß zur Dosierpumpe 4 ist damit unterbrochen. Zum Lösen des Schmelzepfropfens in dem Rohrstück wird die Heizeinrichtung der Rücklaufeinrichtung 14 aktiviert.

Es ist jedoch auch möglich, ein Rückschlagventil als Rücklaufeinrichtung zu verwenden. Hierbei würde das Rückschlagventil durch den Druck der flüssigen Farbe geöffnet.

Die Rücklaufeinrichtung 14 könnte jedoch auch bei dem dargestellten Ausführungsbeispiel innerhalb des Verteilerblockes 26 zwischen dem Schmelzeanschluß 19 und dem Dosierauslaß 13 angeordnet sein.

Bei den in den Figuren 1, 2 und 4 dargestellten Ausführungsbeispielen lassen sich alle schmelzeführenden Bauteile beheizbar ausführen. Dadurch besteht die Möglichkeit, auch besonders Hochviskosefarben mit hinreichender Dosiergenauigkeit einer Polymerschmelze beizumengen. Anstelle der flüssigen Farbe können selbstverständlich auch andere flüssige Additive vorteilhaft der Schmelze beigefügt werden.

### Bezugszeichenliste

- 1: Tank
- 2: Farbe
- 3: Förderpumpe
- 4: Dosierpumpe
- 5: Steuereinrichtung
- 6: Pumpenantrieb
- 6.1: Pumpenantrieb Förderpumpe
- 6.2: Pumpenantrieb Dosierpumpe
- 7: Drucksensor
- 8: Einlaßleitung
- 9: Fördereinlaß
- 10: Förderauslaß
- 11: Förderleitung
- 12: Dosiereinlaß
- 13: Dosierauslaß
- 14: Rücklaufeinrichtung
- 15: Dosierleitung
- 16: Druckquelle
- 17: Gaspolster
- 18: Farbanschluß
- 19: Schmelzeanschluß
- 20: Baueinheit
- 21: Zahnradpumpe
- 22: Zahnradsatz
- 23: Führungsmittel
- 23.1: Extruder
- 23.2: Schmelzeleitung
- 23.3: Mischer
- 23.4: Spinnpumpe
- 24: Druckstellventil
- 25: Bypassleitung
- 26: Verteilerblock
- 27: Antriebswelle
- 28: Kopplungswelle
- 29: Rücklaufanschluß

## Patentansprüche

1. Vorrichtung zum Einspeisen einer flüssigen Farbe in eine Polymerschmelze mit einer Dosierpumpe (4), welche einen Dosiereinlaß (12) und einen Dosierauslaß (13) aufweist, wobei der Dosiereinlaß (12) mit einem Tank (1) und der Dosierauslaß (13) mit einem die Polymerschmelze führendes Führungsmittel (23) verbunden sind und wobei durch die Dosierpumpe (4) der Polymerschmelze in dem Führungsmittel (23) die aus dem Tank (1) geförderte Farbe (2) in dosierter Menge zugegeben wird, wobei der Dosiereinlaß (12) der Dosierpumpe (4) mit einem Förderauslaß (10) einer Förderpumpe (3) verbunden ist und die Förderpumpe (3) einen Fördereinlaß (9) zur Verbindung mit dem Tank (1) aufweist, **dadurch gekennzeichnet, dass** der Tank (1) mit einer Druckquelle (16) verbunden ist, durch welche Druckquelle (16) ein auf die im Tank (1) gespeicherte Farbe (2) einwirkendes Gaspolster (17) erzeugbar ist.

2. Vorrichtung nach Anspruch 1, **dadurch gekennzeichnet, dass** der Dosierpumpe (4) und der Förderpumpe (3) jeweils ein steuerbarer Pumpenantrieb (6.1, 6.2) zugeordnet ist und dass die Pumpenantriebe (6.1, 6.2) mit einer Steuereinrichtung (5) verbunden sind.

3. Vorrichtung nach Anspruch 2, **dadurch gekennzeichnet, dass** ein Drucksensor (7) zwischen dem Förderauslaß (10) der Förderpumpe (3) und dem Dosiereinlaß (12) der Dosierpumpe (4) angeordnet ist und dass der Drucksensor (7) mit der Steuereinrichtung (5) verbunden ist.

4. Vorrichtung nach Anspruch 1, **dadurch gekennzeichnet, dass** der Dosierpumpe (4) und der Förderpumpe (3) ein gemeinsamer Pumpenantrieb (6) zugeordnet ist und dass der Pumpenantrieb (6) mit der Steuereinrichtung (5) verbunden ist.

5. Vorrichtung nach Anspruch 4, **dadurch gekennzeichnet, dass** die Förderpumpe (3) gegenüber der Dosierpumpe (4) ein größeres Fördervolumen aufweist.

6. Vorrichtung nach Anspruch 5, **dadurch gekennzeichnet, dass** der Förderauslaß (10) der Förderpumpe (3) durch eine Förderleitung (11) mit dem Dosiereinlaß (12) der Dosierpumpe (4) verbunden ist und dass die Förderleitung (11) über ein Druckstellventil (24) mit einer Bypassleitung (25) verbunden ist.

7. Vorrichtung nach Anspruch 6, **dadurch gekennzeichnet, dass** die Bypassleitung (25) mit dem Fördereinlaß (9) der Förderpumpe (3) oder mit dem Tank (1) verbundenen ist.

8. Vorrichtung nach einem der vorgenannten Ansprüche, **dadurch gekennzeichnet, dass** dem Dosierauslaß (13) der Dosierpumpe (4) eine Rücklaufeinrichtung (14) zugeordnet ist, durch welche ein Rückfluß der Polymerschmelze aus dem Führungsmittel (23) in den Dosierauslaß (13) verhindert wird.

9. Vorrichtung nach Anspruch 8, **dadurch gekennzeichnet, dass** die Rücklaufeinrichtung (14) durch ein Rückschlagventil oder ein Einfrierventil gebildet ist.

10. Vorrichtung nach einem der Ansprüche 1 bis 9, **dadurch gekennzeichnet, dass** der Tank (1) unmittelbar an dem Fördereinlaß (9) der Förderpumpe (3) installiert ist.

11. Vorrichtung nach einem der vorgenannten Ansprüche, **dadurch gekennzeichnet, dass** die Dosierpumpe (4), die Förderpumpe (3) und die Förderleitung (11) beheizbar ausgebildet sind.

12. Vorrichtung nach einem der vorgenannten Ansprüche, **dadurch gekennzeichnet, dass** die Dosierpumpe (4) als eine Baueinheit (20) mit einem dem Dosierauslaß (13) zugeordneten Schmelzeanschluß (19) und mit einem dem Dosiereinlaß (12) zugeordneten Farbanschluß (18) ausgebildet ist und dass die Baueinheit (20) durch den Schmelzeanschluß (19) wahlweise an einem von mehreren Führungsmittel (23) einer Spinnvorrichtung oder einer schmelzeführenden Einrichtung anschließbar ist.

13. Vorrichtung nach Anspruch 12, **dadurch gekennzeichnet, dass** der Tank (1) als Bestandteil der Baueinheit (20) unmittelbar an dem Farbanschluß (18) angeschlossen ist.

14. Vorrichtung nach einem der Ansprüche 12 oder 13, **dadurch gekennzeichnet, dass** die Baueinheit (20) aus der Dosierpumpe (4) und einer Förderpumpe (3) gebildet ist, wobei der Farbanschluß (18) einem Fördereinlaß (9) der Förderpumpe (3) zugeordnet ist und wobei ein Förderauslaß (10) der Förderpumpe (3) mit dem Dosiereinlaß (12) der Dosierpumpe (3) verbunden ist.

15. Verfahren zum Einspeisen einer flüssigen Farbe in eine Polymerschmelze, bei welchem die aus einem Tank geförderte flüssige Farbe mittels einer Dosierpumpe unter einem Einspeisedruck der Polymerschmelze dosiert zugeführt wird, wobei die flüssige Farbe mittels einer Förderpumpe aus dem Tank gefördert und unter einem Förderdruck der Dosierpumpe zugeführt wird, **dadurch gekennzeichnet, dass** durch Verbinden mit einer Druckquelle (16) ein Gaspolster (17) erzeugt wird, welches auf die im Tank (1) gespeicherte Farbe (2) einwirkt.

16. Verfahren nach Anspruch 15, **dadurch gekennzeichnet, dass** der Förderdruck der flüssigen Farbe am Dosiereinlaß der Dosierpumpe gleich oder kleiner ist als der Einspeisedruck der flüssigen Farbe am Dosierauslaß der Dosierpumpe.

17. Verfahren nach Anspruch 15 oder 16, **dadurch gekennzeichnet, dass** das Fördervolumen der Förderpumpe derart geregelt wird, dass der Förderdruck der flüssigen Farbe am Dosiereinlaß der Dosierpumpe im wesentlichen konstant ist.

18. Verfahren nach Anspruch 15 oder 16, **dadurch gekennzeichnet, dass** das Fördervolumen der Förderpumpe größer ist als das Fördervolumen der Dosierpumpe und dass der Förderdruck der flüssigen Farbe am Dosiereinlaß der Dosierpumpe durch ein Druckstellventil einstellbar ist, wobei die durch die Förderpumpe geförderte überschüssige Farbe separat abgeführt wird.

## Claims

1. Device for injecting a liquid dye into a polymer melt, with a metering pump (4) which comprises a metering inlet (12) and a metering outlet (13), with the metering inlet (12) connecting to a tank (1) and the metering outlet (13) to a polymer melt carrying component (23), and with the metering pump (4) being used to add to the polymer melt in the component (23) measured quantities of the dye (2) that is supplied from the tank (1), whereby the metering inlet (12) of the metering pump (4) connects to a feed outlet (10) of a feed pump (3), and that the feed pump (3) includes a feed inlet (9) for connecting to the tank (1)**, characterized in that t**he tank (1) connects to a source of pressure (16), which permits generating a gas cushion (17) that acts upon the dye (2) stored in the tank (1).

2. Device of claim 1, **characterized in that** a controllable pump drive (6.1, 6.2) is associated respectively to the metering pump (4) and the feed pump (3), and that the pump drives (6.1, 6.2) connect to a control unit (5).

3. Device of claim 2, **characterized in that** a pressure sensor (7) is arranged between the feed outlet (10) of the feed pump (3) and the metering inlet (12) of the metering pump (4), and that the pressure sensor (7) connects to the control unit (5).

4. Device of claim 1, **characterized in that** a common pump drive (6) is associated to the metering pump (4) and the feed pump (3), and that the pump drive (6) connects to the control unit (5).

5. Device of claim 4, **characterized in that** the feed pump (3) has a greater delivery volume than the metering pump (4).

6. Device of claim 5, **characterized in that** the feed outlet (10) of the feed pump (3) connects via a feed line (11) to the metering inlet (12) of the metering pump (4), and that the feed line (11) connects via a pressure control valve (24) to a bypass line (25).

7. Device of claim 6, **characterized in that** the bypass line (25) connects to the feed inlet (9) of the feed pump (3) or to the tank (1).

8. Device of one of the foregoing claims, **characterized in that** a return flow device (14) is associated to the metering outlet (13) of the metering pump (4), which is used to prevent a return flow of the polymer melt from the melt-carrying component (23) into the metering outlet (13).

9. Device of claim 8, **characterized in that** the return flow device (14) is formed by a nonreturn valve or a freeze valve.

10. Device of one of claims 1-9, **characterized in that** the tank (1) is directly installed on the feed inlet (9) of the feed pump (3).

11. Device of one of the foregoing claims, **characterized in that** the metering pump (4), the feed pump (3), and the feed line (11) are constructed for being heated.

12. Device of one of the foregoing claims, **characterized in that** the metering pump (4) forms a structural unit (20) with a melt connection (19) associated to the metering outlet (13) and with a dye connection (18) associated to the metering inlet (12), and that the structural unit (20) is adapted for being connected by means of the melt connection (19) selectively to one or several melt-carrying components (23) of a spin unit or a melt-carrying unit.

13. Device of one of claims 12, **characterized in that** the tank (1) is connected as a component of the structural unit (20) directly to the dye connection (18).

14. Device of one of claims 12 or 13, **characterized in that** the structural unit (20) consists of a metering pump (4) and a feed pump (3), with the dye connection (18) being associated to a feed inlet (9) of the feed pump (3), and with a feed outlet (10) of the feed pump (3) connecting to the metering inlet (12) of the metering pump (4).

15. Method for injecting a liquid dye into a polymer melt, wherein the liquid dye that is delivered from a tank, is supplied in measured quantities to the polymer melt under an injection pressure by means of a metering pump, whereby the liquid dye is delivered from the tank by means of a feed pump and supplied under a feed pressure to the metering pump, **characterized in that** by connecting to a source of pressure (16) a gas cushion (17) is generated that acts upon the dye (2) stored in the tank (1).

16. Method of claim 15, **characterized in that** the feed pressure of the liquid dye at the metering inlet of the metering pump is equal to or smaller than the injection pressure of the liquid dye at the metering outlet of the metering pump.

17. Method of claim 15 or 16, **characterized in that** the delivery volume of the feed pump is controlled such that the feed pressure of the liquid dye at the metering inlet of the metering pump is substantially constant.

18. Method of claim 15 or 16, **characterized in that** the delivery volume of the feed pump is greater than the delivery volume of the metering pump, and that the feed pressure of the liquid dye at the metering inlet of the metering pump is controllable by a pressure control valve, with excessive dye that is delivered by the feed pump being removed separately.

## Revendications

1. Dispositif destiné à introduire dans une fonte de polymères une peinture liquide à l'aide d'une pompe de dosage (4) qui a une entrée de dosage (12) et une sortie de dosage (13), l'entrée de dosage (12) étant connectée à un tank (1) et la sortie de dosage (13) à un moyen de guidage (23) qui mène la fonte de polymère et dans quel cas à l'aide de la pompe de dosage (4) on ajoute à la fonte de polymères dans le moyen de guidage (23) la peinture (2) alimentée à partir du tank (1) en quantité dosée, l'entrée de dosage (12) de la pompe de dosage (4) étant reliée à une sortie d'alimentation (10) d'une pompe d'alimentation (3) et pour la connexion avec le tank (1) la pompe d'alimentation (3) ayant une entrée d'alimentation (9), **caractérisé en ce que** le tank (1) est relié à une source de pression (16) par laquelle source de pression (16) un coussin à gaz (17) peut être généré agissant sur la peinture (2) stockée dans le tank (1).

2. Dispositif selon la revendication 1, **caractérisé en ce qu'**un entraînement de pompe (6.1, 6.2) commandable est associé respectivement à la pompe de dosage (4) et à la pompe d'alimentation (3) et **en ce que** les entraînements de pompe (6.1, 6.2) sont reliés à une installation de commande (5).

3. Dispositif selon la revendication 2, **caractérisé en ce qu'**un capteur de pression (7) est agencé entre la sortie d'alimentation (10) de la pompe d'alimentation (3) et l'entrée de dosage (12) de la pompe de dosage (4) et **en ce que** le capteur de pression (7) est relié à l'installation de commande (5).

4. Dispositif selon la revendication 1, **caractérisé en ce qu'**un entraînement commun de pompe (6) est associé à la pompe de dosage (4) et à la pompe d'alimentation (3) et **en ce que** l'entraînement de pompe (6) est relié à l'installation de commande (5).

5. Dispositif selon la revendication 4, **caractérisé en ce que** par rapport à la pompe de dosage (4) la pompe d'alimentation (3) a un volume d'alimentation plus grand.

6. Dispositif selon la revendication 5, **caractérisé en ce que** la sortie d'alimentation (10) de la pompe d'alimentation (3) est reliée par une conduite d'alimentation (11) à l'entrée de dosage (12) de la pompe de dosage (4) et **en ce que** la conduite d'alimentation (11) est reliée à une conduite de dérivation (25) à l'intermédiaire d'une valve d'ajustement de la pression (24).

7. Dispositif selon la revendication 6, **caractérisé en ce que** la conduite de dérivation (25) est reliée à l'entrée d'alimentation (9) de la pompe d'alimentation (3) ou au tank (1).

8. Dispositif selon l'une des revendications précitées, **caractérisé en ce qu'**un dispositif de reflux (14) est associé à la sortie de dosage (13) de la pompe de dosage (4), par lequel dispositif de reflux (14) un reflux de la fonte de polymères à partir du moyen de guidage (23) jusqu'à dans la sortie de dosage (13) est évité.

9. Dispositif selon la revendication 8, **caractérisé en ce que** le dispositif de reflux (14) est formé par un clapet de retenue ou un clapet de solidification.

10. Dispositif selon l'une des revendications 1 à 9, **caractérisé en ce que** le tank (1) est installé directement au niveau de l'entrée d'alimentation (9) de la pompe d'alimentation (3).

11. Dispositif selon l'une des revendications précitées, **caractérisé en ce que** la pompe de dosage (4), la pompe d'alimentation (3) et la conduite d'alimentation (11) sont réalisées de manière à pouvoir être réchauffées.

12. Dispositif selon l'une des revendications précitées, **caractérisé en ce que** la pompe de dosage (4) est réalisée comme unité de construction (20) avec une connexion de fonte (19) associée à la sortie de dosage (13) et avec une connexion de peinture (18) associée à l'entrée de dosage (12) et **en ce que** l'unité de construction (20) peut être connectée au choix avec un parmi plusieurs moyens de guidage (23) d'un dispositif de filage ou avec une installation menant la fonte.

13. Dispositif selon la revendication 12, **caractérisé en ce que** comme composant de l'unité de construction (20) le tank (1) est raccordé directement à la connexion de peinture (18).

14. Dispositif selon l'une des revendications 12 ou 13, **caractérisé en ce que** l'unité de construction (20) est formée par la pompe de dosage (4) et par une pompe d'alimentation (3), la connexion de peinture (18) étant associée à une entrée d'alimentation (9) de la pompe d'alimentation (3) et une sortie d'alimentation (10) de la pompe d'alimentation (3) étant reliée à l'entrée de dosage (12) de la pompe de dosage (3).

15. Procédé destiné à introduire dans une fonte de polymères une peinture liquide, dans le cas duquel la peinture liquide alimentée d'un tank est ajoutée de façon dosée dans la fonte de polymères au moyen d'une pompe de dosage sous une pression d'introduction, la peinture liquide étant sortie hors du tank au moyen d'une pompe d'alimentation et étant fournie sous une pression d'alimentation à la pompe de dosage, **caractérisé en ce que** par la connexion avec une source de pression (16) un coussin à gaz (17) peut être généré agissant sur la peinture (2) stockée dans le tank (1).

16. Procédé selon la revendication 15, **caractérisé en ce que** la pression d'alimentation de la peinture liquide à l'entrée de dosage de la pompe de dosage est égale ou plus faible que la pression d'introduction de la peinture liquide à la sortie de dosage de la pompe de dosage.

17. Procédé selon la revendication 15 ou 16, **caractérisé en ce que** le volume d'alimentation de la pompe d'alimentation est réglé de manière telle que la pression d'alimentation de la peinture liquide à l'entrée de dosage de la pompe de dosage est sensiblement constante.

18. Procédé selon la revendication 15 ou 16, **caractérisé en ce que** le volume d'alimentation de la pompe d'alimentation est plus grand que le volume d'alimentation de la pompe de dosage et **en ce que** la pression d'alimentation de la peinture liquide à l'entrée de dosage de la pompe de dosage peut être ajustée par une valve d'ajustement de pression, la peinture excédante alimentée par la pompe d'alimentation étant évacuée séparément.
